# EUROPEAN PATENT SPECIFICATION

(11) **EP 3 335 934 B1**
(45) Date of publication and mention of the grant of the patent: **25.03.2020**
(21) Application number: 17206636.7
(22) Date of filing: 12.12.2017
(51) Int. Cl.: B60P 1/64, B60P 7/13

(54) **FRONT LOCK MECHANISM FOR CONTAINER CARRIER VEHICLES**
VORDERER VERRIEGELUNGSMECHANISMUS FÜR BEHÄLTERTRÄGERFAHRZEUGE
MÉCANISME DE VERROUILLAGE AVANT POUR VÉHICULES PORTE-CONTENEURS

(30) Priority: 14.12.2016 TR 201618517
(43) Date of publication of application: 20.06.2018
(73) Proprietor: Tirsan Treyler Sanayi Ve Ticaret Anonim Sirketi, 54580 Sakarya (TR)
(72) Inventor: YENILMEZ, ADEM, SAKARYA (TR); DINDAR, SEYIT, SAKARYA (TR)
(74) Representative: Yamankaradeniz, Kemal

(56) References cited:
- EP-A1- 2 765 029
- EP-A2- 1 637 393
- ES-A1- 2 228 215
- NL-C1- 1 019 712

## Description

### TECHNICAL FIELD

The invention relates to the front lock mechanism of container carrier vehicles which are used for road transportation with containers at roads and ports and which usually carry pallets and partial loads.

The invention, in particular, relates to the mechanism that allows the vehicles carrying 40 ft non-tunnel, 40 ft tunnel and 45 tunnel containers to carry such loads despite the fact that the front lock mechanisms of such vehicles are multifunctional and the fact that dimensions of these containers are quite different.

### KNOWN STATE OF TECHNIQUE

Various securing devices are used in order to secure the containers on container carrier vehicles used for road and intermodal transportation to carry the freight containers with which all kinds of cargo is transported today.

With the patent review conducted with regards to the previous technique, a European Patent application numbered EP1637393 (A2) has been encountered. The lock within the mechanism related to the invention allows both 40 ft and 45 ft containers to be transported by being opened/closed as 3 telescoped profiles are engaged and slided on top of each other. There is a container lock part in the main body and the other container lock part in the body. The body is removed from the front panel and thus the structure is made ready to carry 40 ft containers. As mentioned, the structure has a quite complex form. In time, due to excessive loads and external impacts, this structure becomes unable to perform the required transportation. It is easy to damage and impossible to repair. As it performs its function with telescoping of 3 profiles, it is very heavy. This leads to increases in costs.

In addition, as the said structure needs to have a narrow manufacturing tolerance, with expansions within each other, there are strains and jamming. Therefore users are not able to use these locks effectively.

Another European Patent application numbered EP1777103B1 and titled "Universal locking device for containers with different sizes on a vehicle" has been encountered. The summary of this invention is as follows: The invention is a vehicle chassis to carry load-holding vessels such as containers, bodies etc. and incorporates at least one chassis strut oriented substantially transversely to the longitudinal axis of the chassis. This strut is secured transversely to the longitudinal axis of the chassis and has a locking device which is held in way that is movable by pivoting in order to secure the load-holding vessels. The locking device is in such a position to be movable in guides arranged transversely to the longitudinal axis of the chassis and can be transferred from a securing position associated with width of a load-holding vessel to another securing position associated with width of another load-holding vessel. However, as mentioned, this mechanism also has a quite complex form.

The said locking device is located at the middle of the left container lock and right container lock. It can be moved to outer sides of locks and can perform pivotal movements by means of the shaft. When the design is in this setup, the additional locking devices slide outward on the shaft and allow transportation of 40 ft containers. The mentioned factors has an effect on the whole body. This structure is damaged easily with top-down loading and bottom-up unloading operations and in time, fails to perform the required functions which causes problems. In addition as the additional securing devices cannot be removed from the structure, vehicle weights are increased unnecessarily in case of transportation of only 45ft containers.

Another Patent application numbered 2014/15011 and titled "Container locking mechanism for container carrier vehicles" has been encountered. The summary of this invention is as follows: The invention relates to a locking mechanism which enables the changes on the vehicles to be reduced by developing the locking mechanisms on vehicles carrying 40ft flat and tunnel containers and 45ft tunnel containers. When the invention is examined in detailed, it can be seen that it will become unable to perform the required transportation functions in time due to excessive loads and external impacts.

Other securing devices are known also from the following publications: EP 2 765 029 A1 and EP 1 637 393 A2.

In conclusion, due to the negative aspects specified above and inability of existing solutions to address the issue, it has become necessary to make improvements to eliminate the problems regarding front locking mechanisms of the container carrier vehicles used for load transportation.

### BRIEF DESCRIPTION OF THE INVENTION

The present invention relates to a front locking mechanism meeting all of the aforementioned requirements, eliminating all disadvantages, used for road transportation of transport freight containers holding all kinds of loads and used to secure the containers holding usually pallet and partial loads on to the container carrier vehicles.

Primary purpose of the invention is to increase the functionality of front lock mechanisms of vehicles carrying 40 ft non-tunnel, 40ft tunnel and 45 tunnel containers by using a single mechanism.
Another purpose of the invention is providing ergonomic usage.
Another purpose of the invention is providing ease of mounting.
Another purpose of the invention is being safe.
Another purpose of the invention is that it is economical in terms of cost and labor.
Structural characteristics and all advantages of the invention will be understood more clearly with the figures provided below and detailed explanations referencing these figures. Therefore, the evaluation must be conducted in view of these figures and detailed description.

### FIGURES TO ASSIST UNDERSTANDING THE INVENTON

Figure-1 : Perspective view of frontal lock mechanism for 45 ft tunnel container
Figure-2 : Perspective view of frontal lock mechanism for 40 ft tunnel container
Figure-3 : Perspective view from below of lock mechanism for 40 ft non-tunnel container
Figure-4 : Perspective view of front lock structure
Figure-5 : Perspective view of front lock middle profile assembly
Figure-6 : Perspective view of front lock left profile assembly
Figure-7 : Perspective view of front lock right profile assembly
Figure-8 : Perspective view of portable left lock assembly
Figure-9 : Perspective view of portable right lock assembly
Figure-10 : Perspective view of container bearing assembly
Figure-11 : Sectional perspective view of front lock assembly with pin at open position
Figure-12 : Sectional perspective view of front lock assembly with pin at closed position
Figure-13 : Perspective view of bump stop

### PART NUMBERS

- 1.: 45 ft tunnel container
1.1. Frontal locking hole
- 2.: Front lock middle profile assembly
2.1. Front lock profile U gap
2.1.1. Inner bearing seat
2.1.2. Outer bearing seat
2.2. Middle profile
2.3. Bearing assembly seat
2.4. Bump stop vertical slide housing
2.5. Bump stop bottom bearing
2.5.1. Horizontal slide housing
2.5.2. Bottom position seat
2.5.3. Top position seat
- 3.: Front lock left profile assembly
3.1. Front lock horizontal pin
3.2. Front lock vertical pin
3.3. Handle
3.3.1. Middle pin hole
3.3.2. Front pin hole
3.3.3. Rear pin hole
3.3.4. Handle seat
3.3.5. Handle bumper
3.4. Front lock profile outer bumper
3.4.1. Horizontal hole
3.4.2. Vertical hole
3.4.3. Bumper seat
3.5. Front lock profile outer top sheet
3.5.1. Top sheet gap
3.6. Front lock profile
3.6.1. Vertical pin hole
3.6.2. Handle guide pin
3.6.3. Profile gap
3.6.4. Angled gap
3.7. Front lock profile inner support sheet
- 4.: Front lock right profile assembly
- 5. 40: ft tunnel container
5.1. Frontal locking hole
5.2. Bottom locking hole
- 6.: Portable left lock assembly
6.1. Container lock
6.1.1. Locking pin
6.2. Radial bearing
6.2.1. Radial bearing seat
6.3. Rear sheet
6.3.1. Portable lock teeth
6.4. Support sheet
- 7.: Portable right lock assembly
- 8.: Bearing assembly
8.1. Bearing assembly hole
- 9.: Bump stop
9.1. Bearing hole
9.2. Positioning hole
- 10.: Moving pin assembly
10.1. Moving pin
- 11.: Bump stop pin

### DETAILED DESCRIPTION OF THE INVENTION

In this detailed description, preferred setups of the product with property of being able to be used as front lock mechanism of container carrier vehicles has been described solely for the purpose to better clarify the subject without placing any limitations.

The mechanism consists of 45 ft tunnel container (1), front lock middle profile assembly (2), front lock left profile assembly (3), front lock right profile assembly (4), 40 ft tunnel container (5), portable left lock assembly (6), portable right lock assembly (7), bearing assembly (8), bump stop (9), moving pin assembly (10) and bump stop bin (11).

45 ft tunnel containers (1) are box-body structures which are used for road transportation performed at roads and ports with containers and usually carry pallet and partial loads and have a length of 45 ft with loading tunnel. The frontal locking hole (1.1) on 45 ft tunnel containers (1) are sockets into which the front lock horizontal pins (3.1) are inserted. The container is secured from the front as the said pin enters the frontal locking hole (1.1)
The mechanism is primarily formed by assembly via mounting of front lock middle profile assembly (2), left profile assembly (3), front lock right profile assembly (4), front lock horizontal pin (3.1), front lock vertical pin (3.2), handle (3.3), portable left lock assembly (6), portable right lock assembly (7), bearing assembly (8) and bump stop pin (11) and assembly via welding of bump stop (9) and moving pin assembly.

Front lock middle profile assembly (2) is the part where front lock right and left profile assemblies (3, 4) are mounted. Front lock right and left profile assemblies (3, 4) are mounted within the front lock middle profile assembly (2) and move inside-outside within the front lock middle profile assembly (2). It is the main body part where all mechanisms are mounted.

Front lock middle profile assembly (2) consists of front lock profile U gap (2.1), middle profile (2.2), bearing assembly seat (2.3), bump stop vertical slide housing (2.4) and bump stop bottom bearing (2.5).

Stop bump vertical slide housing (2.4) is the space allowing the stop bump (9) to slide through the middle profile (2.2). It moves left and right, front and back by passing through the stop bump (9).

Stop bump bottom seat (2.5) is the part on which the stop bump (9) is secured and slides. Stop bump horizontal slide housing (2.5.1) consists of stop bump bottom position seat (2.5.2) and stop bump top position seat (2.5.3).

Stop bump horizontal slide housing (2.5.1) allows the stop bump (9) to be secured on the stop bump bottom seat (2.5) in 2 different positions thanks to its shape.

Front lock middle profile assembly (2) is formed by assembling the middle profile (2.2), bearing assembly seat (2.3), stop bump bottom seat (2.5) and moving pin assembly (10) elements by means of welding.

Middle profile (2.2) has gaps named front lock profile U gap (2.1) and stop bump vertical slide housing (2.4). Front lock vertical pin (3.2) can move in "U" form within the front lock profile U gap (2.1). Front lock profile U gap (2.1) is the gap shaped U where the front lock vertical pin (3.2) is mounted. Due to its U shape, it allows the front lock vertical pin (3.2) to be in two different positions.

Front lock profile U gap (2.1) incorporates front lock profile inner bearing seat (2.1.1) and front lock profile outer bearing seat (2.1.2).

Front lock profile inner bearing seat (2.1.1) allows mounting the parts of front lock right and left profile assemblies (3, 4) for transportation of 45 ft tunnel (1) and 40 ft non-tunnel containers. Front lock profile outer bearing seat (2.1.2) allows mounting the parts of front lock right and left profile assemblies (3, 4) for transportation of 40 ft tunnel containers (5).

Front lock right and left profile assembly (3, 4) is the part which can go in/out to front lock middle profile assembly (2). It can go in/out at the said profile depending on the type of transported container.

While the front lock vertical pin (3.2) element is mounted in the front lock profile inner bearing seat (2.1.1), front lock left profile assembly (3) and front lock right profile assembly (4) are inserted in the front lock middle profile assembly (2). While the front lock vertical pin (3.2) element is mounted in the front lock profile outer bearing seat (2.1.2), front lock left profile assembly (3) and front lock right profile assembly (4) are mounted in the front lock middle profile assembly (2) with a bit sticking out. Front lock vertical pin (3.2) is the part moving between 2 different positions within front lock middle profile assembly (2.1).

Handle (3.3) is the part where the front lock horizontal pin (3.1) is mounted. Handle (3.3) consists of handle middle pin hole (3.3.1), handle front pin hole (3.3.2), handle rear pin hole (3.3.3), handle seat (3.3.4) and handle bump stop (3.3.5).

Handle (3.3) and front lock horizontal pin (3.1) is mounted on each other through handle front pin hole (3.3.2). Handle (3.3) is connected with front lock profile (3.6) via the rear pin hole (3.3.3) located on the former and handle guide pin (3.6.2) welded on the latter. Thus when the handle (3.3) is pulled and pushed, it can pivot on the handle rear pin hole (3.3.3) and handle guide pin (3.6.2).

By pulling or pushing the handle (3.3) by hand thanks to handle seat (3.3.4) gap, front lock horizontal pin (3.1) can be moved in linear path inside/outside within the front lock profile outer bumper (3.4). In order for the front lock horizontal pin (3.1) and handle (3.3) to be mounted in the front lock profile outer bumper (3.4), the handle middle pin hole (3.3.1) and the moving pin assembly (10) welded on front lock profile outer bumper (3.4) are used. Moving pin assembly (10) is moved to open position and thus the middle pin (10.1) is released from handle middle pin hole (3.3.1). By pulling the handle (3.3) from handle seat (3.3.4), front lock horizontal pin (3.1) is pulled inwards in linear path within the front lock profile outer bumper (3.4). The front lock horizontal pin (3.1) can thus be inserted to/ejected from 45 ft tunnel container (1) 45 ft tunnel frontal locking hole (1.1) and 40 ft tunnel container (5) 40 ft tunnel frontal locking hole (5.1). Thus, 45 ft tunnel container (1) and 40 ft tunnel container (5) is secured or released by front lock horizontal pin (3.1). Middle pin hole (3.3.1) is secured on front lock right and left profile assembly (3, 4) with moving pin assembly (10).

When handle (3.3) is pulled, handle bumper (3.3.5) hits the middle profile (2.2) inner surface and the front lock horizontal pin (3.1) is stopped. In other words, it allows the front lock horizontal pin (3.1) to move at required distance within the front lock profile outer bumper (3.4).

Front lock left profile assembly (3) is the part which can go in/out to front lock middle profile assembly (2). It can go in/out at the said profile depending on the type of transported container.

Front lock left profile assembly (3) consists of front lock horizontal pin (3.1), front lock vertical pin (3.2), handle (3.3), front lock profile outer bumper (3.4), front lock profile top sheet (3.5), front lock profile (3.6) and front lock profile inner support sheet (3.7). Front lock left profile assembly (3) is formed by assembling front lock profile outer bumper (3.4), front lock profile top sheet (3.5), front lock profile (3.6), front lock guide pin (3.6.2) and front lock profile inner support sheet (3.7) by means of welding.

Front lock profile outer bumper (3.4) is the part on which the front lock horizontal pin (3.19 and handle (3.3) is secured. Front lock profile outer bumper (3.4) incorporates front lock profile outer bumper horizontal hole (3.4.1), front lock profile outer bumper vertical hole (3.4.2) and front lock profile outer bumper seat (3.4.3). Front lock horizontal pin (3.1) is inserted into front lock profile outer bumper horizontal hole (3.4.1). Moving pin assembly (10) is inserted into front lock profile outer bumper vertical hole (3.4.2). Handle (3.3) is inserted into front lock profile outer bumper seat (3.4.3).

Front lock profile top sheet (3.5) incorporates front lock profile top sheet gap (3.5.1). Portable lock teeth (6.3.1) which is sub-part of portable left lock assembly (6) and portable right lock assembly (7) is inserted into front lock profile top sheet gap (3.5.1).

Front lock profile (3.6) is the part which can go in/out to front lock middle profile assembly (2). Front lock profile (3.6) incorporates front lock vertical pin hole (3.6.1), front lock profile hap (3.6.3) and front lock profile angled gap (3.6.4). Front lock vertical pin (3.2) is mounted in front lock vertical pin hole (3.6.1). Front lock profile gap (3.6.3) allows creation of a gap until the bump stop (9) is mounted between, when the front lock right and left profile assemblies (3.4) are within the front lock middle profile assembly (2). Front lock profile angled gap (3.6.4) is a gap created in order to allow manual pushing/pulling of handle (3.3) through front lock right and left profile assemblies (3.4) and due to regulation and is mounted in front lock right and left profile assemblies (3.4) by handle (3.3) guide pin (3.6.2) and rear pin hole (3.3.3).

Front lock profile inner support sheet (3.7) is the part on which stop bump bears from front. This part also serves as support.

Front lock right profile assembly (4) is formed by assembling front lock profile outer bumper (3.4), front lock profile top sheet (3.5), front lock profile (3.6), front lock guide pin (3.6.2) and front lock profile inner support sheet (3.7) by means of welding.

Front lock profile outer bumper (3.4) incorporates front lock profile outer bumper horizontal hole (3.4.1), front lock profile outer bumper vertical hole (3.4.2) and front lock profile outer bumper seat (3.4.3).

Front lock horizontal pin (3.1) is inserted into front lock profile outer bumper horizontal hole (3.4.1). Moving pin assembly (10) is inserted into front lock profile outer bumper vertical hole (3.4.2). Handle (3.3) is inserted into front lock profile outer bumper seat (3.4.3).

Front lock profile top sheet (3.5) is the part where the portable left lock assembly (6) and portable right lock assembly (7) are mounted. Front lock profile top sheet (3.5) incorporates front lock profile top sheet gap (3.5.1). Portable lock teeth (6.3.1) which is sub-part of portable left lock assembly (6) and portable right lock assembly (7) is inserted into front lock profile top sheet gap (3.5.1).

Front lock profile (3.6) incorporates front lock vertical pin hole (3.6.1), front lock profile hap (3.6.3) and front lock profile angled gap (3.6.4). Front lock vertical pin (3.2) is mounted in front lock vertical pin hole (3.6.1). Front lock profile gap (3.6.3) allows creation of a gap until the bump stop (9) is mounted between, when the front lock right and left profile assemblies (3.4) are within the front lock middle profile assembly (2). Front lock profile angled gap (3.6.4) is a gap created in order to allow manual pushing/pulling of handle (3.3) through front lock right and left profile assemblies (3.4) and due to regulation and is mounted in front lock right and left profile assemblies (3.4) by handle (3.3) handle guide pin (3.6.2) and rear pin hole (3.3.3).

Front lock profile inner support sheet (3.7) is the part on which stop bump bears from front. This part also serves as support.

Portable left lock assembly (6) is only used for 40 ft tunnel container loading and non-tunnel loading. In case 40 ft tunnel container (5) is to be transported as non-tunnel, portable left lock assembly (6) is secured on front lock left profile assembly (3) when the front lock vertical pin (3.2) is positioned at front lock profile inner bearing seat (2.1.1).

Portable left lock assembly (6) is formed by assembly via welding of the container lock (6.1), portable lock radial bearing (6.2), portable lock rear sheet (6.3) and portable lock support sheet (6.4).

Container lock (6.1) incorporates container lock pin (6.1.1). Container lock pin (6.1.1) allows 40 ft tunnel containers (5) to be secured to portable left lock assembly (6) by entering the 40 ft tunnel container bottom locking hole (5.2) which is bottom part of 40 ft tunnel container (5).

Portable lock radial bearing (6.2) has the portable lock radial bearing seat (6.2.1). Portable lock radial bearing seat (6.2.1), by means entrance of front lock horizontal pin (3.1) thereto, allows the portable left lock assembly (6) to be secured and moved and supports it with bearings.

Portable lock rear sheet (6.3) has the portable lock teeth (6.3.1). Portable lock teeth (6.3.1) is the male of the front lock profile top sheet gap (3.5.1) which is bottom part of front lock right and left profile assemblies (3, 4).

Front lock profile top sheet gap (3.5.1) and portable lock teeth (6.3.1) engage and allow the front lock left profile assembly (3) to interlock with portable left lock assembly (6). Portable lock support sheet (6.4) serves as reinforcement within portable left lock assembly (6) and increases strength of portable left lock assembly (6).

Portable left lock assembly (6) and portable right lock assembly (7) are removable. They are used only for 40 ft tunnel container non-tunnel loadings. In case 40 ft tunnel container (5) is to be transported as non-tunnel, portable right lock assembly (7) is secured on front lock right profile assembly (4) when the front lock vertical pin (3.2) is positioned at front lock profile inner bearing seat (2.1.1).

Portable right lock assembly (7) is formed by assembly via welding of the container lock (6.1), portable lock radial bearing (6.2), portable lock rear sheet (6.3) and portable lock support sheet (6.4).

Container lock (6.1) incorporates container lock pin (6.1.1). Container lock pin (6.1.1) allows 40 ft tunnel containers (5) to be secured to portable left lock assembly (6) by entering the 40 ft tunnel container bottom locking hole (5.2) which is bottom part of 40 ft tunnel container (5).

Portable lock radial bearing (6.2) has the portable lock radial bearing seat (6.2.1). Portable lock radial bearing seat (6.2.1), through entrance of front lock horizontal pin (3.1) thereto, allows the portable left lock assembly (6) to be secured and moved and supports it with bearings.

Portable lock rear sheet (6.3) has the portable lock teeth (6.3.1). Portable lock teeth (6.3.1) is the male of the front lock profile top sheet gap (3.5.1) which is bottom part of front lock right and left profile assemblies (3, 4).

Front lock profile top sheet gap (3.5.1) and portable lock teeth (6.3.1) engage and allow the front lock right profile assembly (4) to interlock with portable right lock assembly (7). Portable lock support sheet (6.4) serves as reinforcement within portable right lock assembly (7) and increases strength of portable right lock assembly (7).

Bearing assembly (8) allows the containers to be secured without damaging the parts during loading and unloading. Bearing assembly (8) enters to bearing assembly seat (2.3). Bearing assembly (8) incorporates bearing assembly hole (8.1). Bearing assembly hole (2.3) is secured and mounted with the moving pin assembly (10) welded thereon. It can be mounted or dismounted as required by means of moving pin assembly (10).

Stop bump (9) incorporates stop bump bearing hole (9.1) and stop bump positioning hole (9.2). Stop bump pins are mounted in stop bump bearing hole (9.1) holes. Moving pin assembly (10) is welded on stop bump positioning hole (9.2). Stop bump pin (11) is then inserted to stop bump vertical slide (2.5.1) seat. Stop bump pin (11) can move left and right in stop bump vertical slide housing (2.5.1). Stop bump bottom position seat (2.5.2) and stop bump top position seat (2.5.3) are used to position and secure this movement as required.

Stop bump (9) is the part allowing the front lock left profile assembly (3) and front lock right profile assembly (4) to be secured frontally in front lock middle profile (2). Stop bump (9) passes through stop bump vertical slide housing (2.4). Then, the stop bump (9) and the moving pin assembly (10) is welded together. This new welded structure can move right and left, front and rear with this new form inside the stop bump vertical slide housing (2.4).

In order for bump stop (9) and moving pin assembly (10) to be secured and moved with required positions; stop bump bottom bearing (2.5) has bump stop horizontal slide housing (2.5.1), bump stop bottom position seat (2.5.2) and bump stop top position seat (2.5.3) gaps.

When the bump stop (9) and moving pin assembly (10) are secured by means of moving pin (10.1) through bump stop bottom position seat (2.5.2), front lock left profile assembly (3) and front lock right profile assembly (4) cannot move forward and are secured.

When the bump stop (9) and moving pin assembly (10) are secured through bump stop bottom position seat (2.5.2), there will not be any gap between the front lock left profile assembly (3) and front lock right profile assembly (4) and bump stop (9).

When the bump stop (9) and moving pin assembly (10) are secured through bump stop top position seat (2.5.3), there will be gap between the front lock left profile assembly (3) and front lock right profile assembly (4) and bump stop (9).

When the bump stop (9) and moving pin assembly (10) are secured by means of moving pin (10.1) through bump stop bottom position seat (2.5.3), front lock left profile assembly (3) and front lock right profile assembly (4) can move forward. The amount of this movement is decided by the form of front lock profile U gap (2.1) and front lock profile gap (3.6.3).

Moving pin assembly (10) secures the stop bump (9) to stop bump bottom bearing (2.5), handle (3.3) to front lock left profile assembly (3), handle (3.3) to front lock right profile assembly (4), bearing assembly (8) to bearing assembly seat (2.3).

Moving pin assembly (10) incorporates moving pin (10.1) part and this part protrudes from the moving pin assembly (10) as much as to be able to perform bearing function. When moving pin assembly (10) is pivoted, moving pin (10.1) bottom part moves into moving pin assembly (10). When repeating motion pin assembly (10) returns to its former position, the moving pin (10.1) once again protrudes from the repeating motion pin assembly (10).

Stop bump pin (11) is mounted on stop bump (9). Then, Stop bump pin (11) is then passed through the stop bump vertical slide (2.5.1) seat. Thus, it is enabled for stop bump (9) to slide in stop bump horizontal slide housing (2.5.1) with the form of this housing.

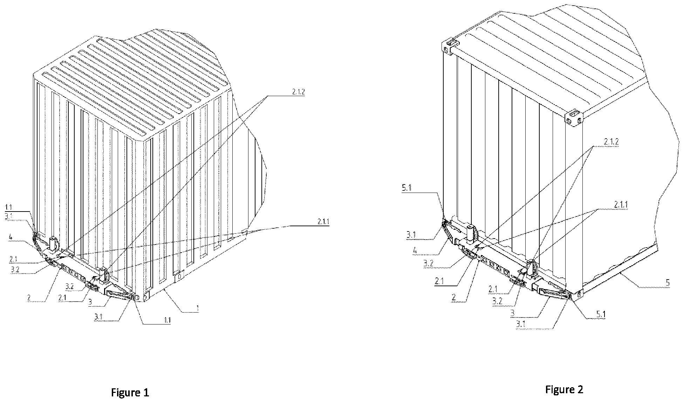

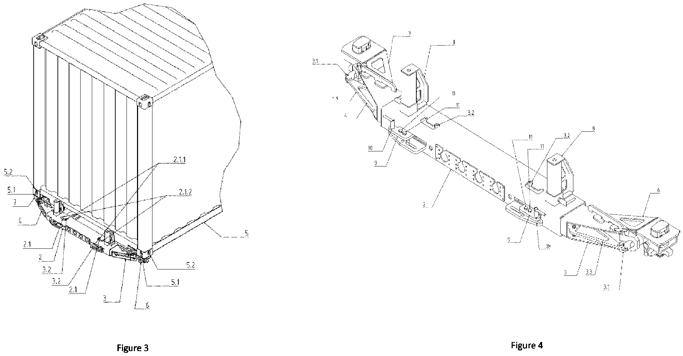

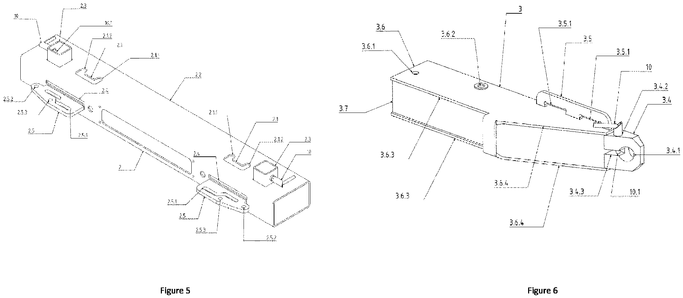

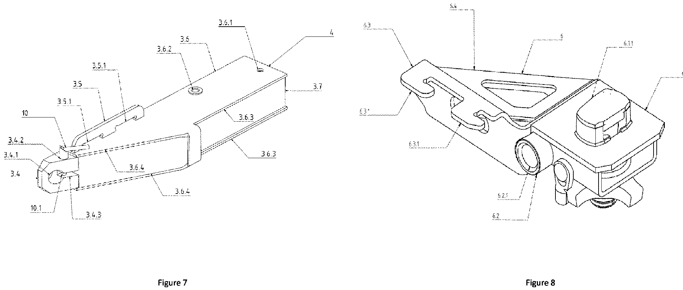

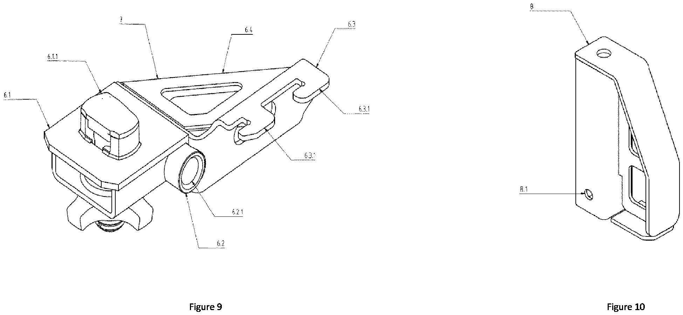

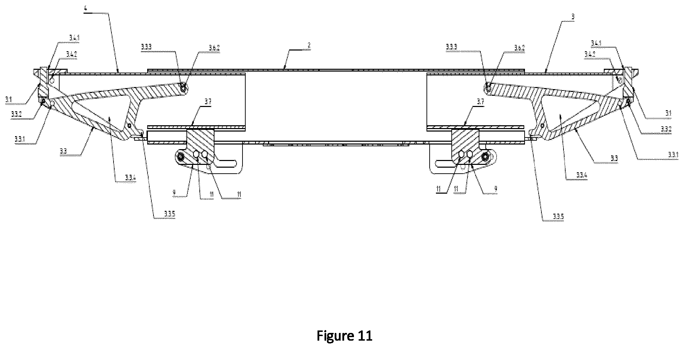

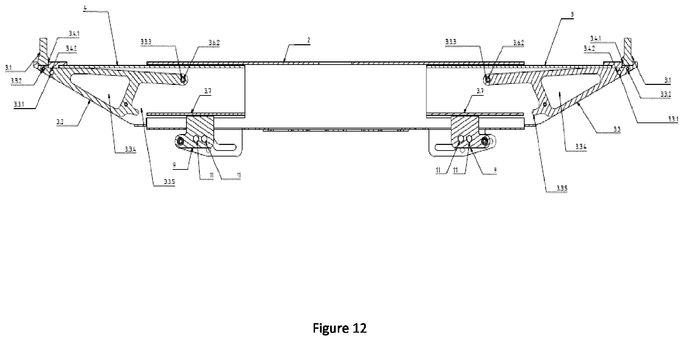

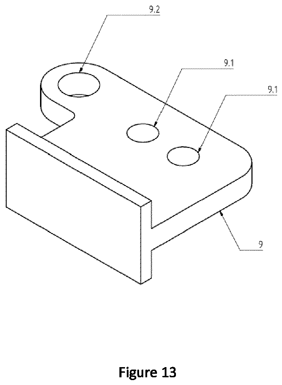

## Claims

1. A front lock mechanism for transport vehicles for transportation with 45 ft tunnel container (1) and 40 ft tunnel container (5) at roads and ports and comprising;
• a front lock middle profile assembly (2) in connection with a front lock left profile assembly (3) and a front lock right profile assembly (4),
• the front lock left profile assembly (3) able to enter/exit the said front lock middle profile assembly (2),
• the front lock right profile assembly (4) able to enter/exit the said front lock middle profile assembly (2),
• a portable left lock assembly (6) in contact with the said front lock left profile assembly (3) and allowing transportation of 40 ft non-tunnel containers,
• a portable right lock assembly (7) in contact with the said front lock right profile assembly (4) and allowing transportation of 40 ft non-tunnel containers,
• a bearing assembly (8) in contact with a moving pin assembly (10) and allowing the containers to be secured during loading and unloading,
**characterized in that** it further comprises:
• a stop bump (9) allowing the said front lock left profile assembly (3) and said front lock right profile assembly (4) to be secured in the front lock middle profile (2),
• the moving pin assembly (10) in contact with the said stop bump (9),
• A stop bump pin (11) in contact with the said stop bump (9).

2. A front lock mechanism according to claim 1, **characterized in that** the front lock middle profile assembly (2) comprises
- a front lock profile U gap (2.1) comprising a front lock profile inner bearing seat (2.1.1) and a front lock profile outer bearing seat (2.1.2),
- a middle profile (2.2),
- a bearing assembly seat (2.3),
- a bump stop vertical slide housing (2.4) through which the stop bump passes and moves
- a bump stop bottom bearing (2.5) on which the stop bump is secured and slides; and which is comprising a stop bump horizontal slide housing (2.5.1), a stop bump bottom position seat (2.5.2) and a stop bump top position seat (2.5.3).

3. A front lock mechanism according to claim 2, **characterized in that** the front lock profile U gap (2.1) comprises a "U" form wherein a front lock vertical pin (3.2) can move.

4. A front lock mechanism according to claim 1, **characterized in that** the left profile assembly (3) comprises a handle (3.3) to which a front lock horizontal pin (3.1) is connected.

5. A front lock mechanism according to claim 4, **characterized in that** the handle (3.3) comprises a handle middle pin hole (3.3.1) secured to said front lock left profile assembly (3) and said front lock right profile assembly (4) via moving said pin assembly (10), a handle front pin hole (3.3.2), a handle rear pin hole (3.3.3), a handle seat (3.3.4) and a handle bump stop (3.3.5).

6. A front lock mechanism according to claim 1, **characterized in that** the left profile assembly (3) comprises a front lock profile outer bumper (3.3) to which the front lock horizontal pin (3.1) and the handle (3.3) are secured and which is comprising a front lock profile outer bumper horizontal hole (3.4.1), front lock profile outer bumper vertical hole (3.4.2) and front lock profile outer bumper seat (3.4.3).

7. A front lock mechanism according to claim 1, **characterized in that** the left profile assembly (3) comprises a front lock profile top sheet (3.5) to which the portable left lock assembly (6) and the portable right lock assembly (7) are mounted and which is comprising a front lock profile top sheet gap (3.5.1) into which the a portable lock teeth (6.3.1) enters.

8. A front lock mechanism according to claim 1, **characterized in that** the left profile assembly (3) comprises a front lock profile (3.6) which can enter/exit the front lock middle profile assembly (2).

9. A front lock mechanism according to claim 8, **characterized in that** the front lock profile (3.6) comprises a front lock vertical pin hole (3.6.1), a front lock profile hap (3.6.3) and a front lock profile angled gap (3.6.4).

10. A front lock mechanism according to claim 1, **characterized in that** the left profile assembly (3) comprises a front lock profile inner support sheet (3.7) to which the stop bump bears from front.

11. A front lock mechanism according to claim 1, **characterized in that** the portable left lock assembly (6) which is formed by assembly via welding of a container lock (6.1), a portable lock radial bearing (6.2), a portable lock rear sheet (6.3) with portable lock teeth and a portable lock support sheet (6.4).

12. A front lock mechanism according to claim 11, **characterized in that** the portable lock radial bearing (6.2) comprises a portable lock radial bearing seat (6.2.1) which, by means of entry of the front lock horizontal pin (3.1) thereto, allows the portable left lock assembly (6) to be secured and moved.

13. A front lock mechanism for carrier vehicles according to Claim 1 or 2 and **characterized in** comprising a bearing assembly (8) preventing damage on parts during container loading and unloading and entering to the bearing assembly seat (2.3).

14. A front lock mechanism according to claim 1, **characterized in that** the stop bump (9) comprises a stop bump bearing hole (9.1) and a stop bump positioning hole (9.2).

15. A front lock mechanism according to claim 1, **characterized in** comprising the stop bump pin (11) secured to the stop bump (9) by passing through the stop bump horizontal slide housing (2.5.1).

## Patentansprüche

1. Vorderer Verriegelungsmechanismus für Transportfahrzeuge zum Transport mit 45 Fuß-Tunnelcontainem (1) und 40 Fuß-Tunnelcontainern (5) auf Straßen und in Häfen, und umfassend;
• eine mittlere Vorderverriegelungsprofilgruppe (2) in Verbindung mit einer linken Vorderverriegelungsprofilgruppe (3) und einer rechten Vorderverriegelungsprofilgruppe (4);
• wobei die linke Vorderverriegelungsprofilgruppe (3) in der Lage ist, in die mittlere Vorderverriegelungsprofilgruppe (2) einzutreten/aus ihr auszutreten,
• die rechte Vorderverriegelungsprofilgruppe (4) in der Lage ist, in die mittlere Vorderverriegelungsprofilgruppe (2) einzutreten/aus ihr auszutreten,
• eine tragbare linke Verriegelungsgruppe (6) in Kontakt mit der linken Vorderverriegelungsprofilgruppe (3), und die einen Transport von 40 Fuß-Nicht-Tunnelcontainern ermöglicht,
• eine tragbare rechte Verriegelungsgruppe (7) in Kontakt mit der rechten Vorderverriegelungsprofilgruppe (4), und die einen Transport von 40 Fuß-Nicht-Tunnelcontainern ermöglicht,
• eine Lagergruppe (8) in Kontakt mit einer sich bewegenden Stiftgruppe (10), und die ermöglicht, dass die Container während des Be- und Entladens gesichert werden,
**dadurch gekennzeichnet, dass** er ferner umfasst:
• einen Anschlagpuffer (9), der es der linken Vorderverriegelungsprofilgruppe (3) und der rechten Vorderverriegelungsprofilgruppe (4) ermöglicht, im mittleren Vorderverriegelungsprofil (2) gesichert zu werden,
• die sich bewegende Stiftgruppe (10) in Kontakt zum Anschlagpuffer (9),
• einen Anschlagpufferstift (11) in Kontakt zum Anschlagpuffer (9).

2. Vorderer Verriegelungsmechanismus nach Anspruch 1, **dadurch gekennzeichnet, dass** die mittlere Vorderverriegelungsprofilgruppe (2) umfasst
- einen Vorderverriegelungsprofil-U-Spalt (2.1), umfassend einen Vorderverriegelungsprofil-Innenlagersitz (2.1.1) und einen Vorderverriegelungsprofil-Außenlagersitz (2.1.2),
- ein mittleres Profil (2.2),
- einen Lagergruppensitz (2.3),
- ein Anschlagpuffergehäuse zum vertikalen Gleiten (2.4), durch das der Anschlagpuffer passiert und sich bewegt,
- ein unteres Anschlagpufferlager (2.5), an dem der Anschlagpuffer gesichert ist und gleitet; und das ein Anschlagpuffergehäuse zum horizontalen Gleiten (2.5.1), einen unteren Anschlagpufferpositionssitz (2.5.2) und einen oberen Anschlagpufferpositionssitz (2.5.3) umfasst.

3. Vorderer Verriegelungsmechanismus nach Anspruch 2, **dadurch gekennzeichnet, dass** der Vorderverriegelungsprofil-U-Spalt (2.1) eine "U"-Form umfasst, in der sich ein vertikaler Vorderverriegelungsstift (3.2) bewegen kann.

4. Vorderer Verriegelungsmechanismus nach Anspruch 1, **dadurch gekennzeichnet, dass** die linke Profilgruppe (3) einen Griff (3.3) umfasst, mit dem ein horizontaler Verriegelungsstift (3.1) verbunden ist.

5. Vorderer Verriegelungsmechanismus nach Anspruch 4, **dadurch gekennzeichnet, dass** der Griff (3.3) ein mittleres Griffstiftloch (3.3.1), das über die sich bewegende Stiftgruppe (10) an der linken Vorderverriegelungsprofilgruppe (3) und der rechten Vorderverriegelungsprofilgruppe (4) gesichert ist, ein vorderes Griffstiftloch (3.3.2), ein hinteres Griffstiftloch (3.3.3), einen Griffsitz (3.3.4) und einen Griffanschlagpuffer (3.3.5) umfasst.

6. Vorderer Verriegelungsmechanismus nach Anspruch 1, **dadurch gekennzeichnet, dass** die linke Profilgruppe (3) einen äußeren Vorderverriegelungsprofilanschlag (3.3) umfasst, an dem der horizontale Vorderverriegelungsstift (3.1) und der Griff (3.3) gesichert sind, und der ein horizontales Vorderverriegelungsprofilaußenanschlagsloch (3.4.1), ein vertikales Vorderverriegelungsprofilaußenanschlagsloch (3.4.2) und einen Vorderverriegelungsprofilaußenanschlagsitz (3.4.3) umfasst.

7. Vorderer Verriegelungsmechanismus nach Anspruch 1, **dadurch gekennzeichnet, dass** die linke Profilgruppe (3) eine obere Vorderverriegelungsprofilplatte (3.5) umfasst, an der die tragbare linke Verriegelungsgruppe (6) und die tragbare rechte Verriegelungsgruppe (7) montiert sind und die einen oberen Vorderverriegelungsprofilplattenspalt (3.5.1) umfasst, in den ein tragbarer Verriegelungszahn (6.3.1) eintritt.

8. Vorderer Verriegelungsmechanismus nach Anspruch 1, **dadurch gekennzeichnet, dass** die linke Profilgruppe (3) ein Vorderverriegelungsprofil (3.6) umfasst, das in die mittlere Vorderverriegelungsprofilgruppe (2) eintreten/aus ihr austreten kann.

9. Vorderer Verriegelungsmechanismus nach Anspruch 8, **dadurch gekennzeichnet, dass** das Vorderverriegelungsprofil (3.6) ein vertikales Vorderverriegelungsstiftloch (3.6.1), einen Vorderverriegelungsprofilspalt (3.6.3) und einen abgewinkelten Vorderverriegelungsprofilspalt (3.6.4) umfasst.

10. Vorderer Verriegelungsmechanismus nach Anspruch 1, **dadurch gekennzeichnet, dass** die linke Profilgruppe (3) eine innere Vorderverriegelungsprofilstützplatte (3.7) umfasst, an der der Anschlagpuffer von vorne lagert.

11. Vorderer Verriegelungsmechanismus nach Anspruch 1, **dadurch gekennzeichnet, dass** die tragbare linke Verriegelungsgruppe (6), die durch Montage per Schweißen einer Containerverriegelung (6.1), eines tragbaren radialen Verriegelungslagers (6.2), einer hinteren tragbaren Verriegelungsplatte (6.3) mit einem tragbaren Verriegelungszahn und einer tragbaren Verriegelungsstützplatte (6.4) montiert wird.

12. Vorderer Verriegelungsmechanismus nach Anspruch 11, **dadurch gekennzeichnet, dass** das tragbare radiale Verriegelungslager (6.2) einen tragbaren radialen Verriegelungslagersitz (6.2.1) umfasst, der mittels des Eintritts des horizontalen Vorderverriegelungsstifts (3.1) darin ermöglicht, dass die tragbare linke Verriegelungsgruppe (6) gesichert und bewegt wird.

13. Vorderer Verriegelungsmechanismus für Trägerfahrzeuge nach Anspruch 1 oder 2 und **dadurch gekennzeichnet, dass** er eine Lagergruppe (8) umfasst, die während des Be- und Entladens Schäden an Teilen verhindert und in den Lagergruppensitz (2.3) eintritt.

14. Vorderer Verriegelungsmechanismus nach Anspruch 1, **dadurch gekennzeichnet, dass** der Anschlagpuffer (9) ein Anschlagpufferlagerloch (9.1) und ein Anschlagpufferpositionierungsloch (9.2) umfasst.

15. Vorderer Verriegelungsmechanismus nach Anspruch 1, **dadurch gekennzeichnet, dass** er den Anschlagpufferstift (11) umfasst, der durch Passieren durch das Anschlagpuffergehäuse zum horizontalen Gleiten (2.5.1) am Anschlagpuffer (9) gesichert ist.

## Revendications

1. Mécanisme de verrouillage avant pour véhicules de transport destinés au transport de conteneur tunnel de 45 pieds (1) et de conteneur tunnel de 40 pieds (5) au niveau des routes et des ports et comprenant ;
• un ensemble profilé central de verrouillage avant (2) en liaison avec un ensemble profilé gauche de verrouillage avant (3) et un ensemble profilé droit de verrouillage avant (4),
• l'ensemble profilé gauche de verrouillage avant (3) pouvant entrer/sortir dudit ensemble profilé central de verrouillage avant (2),
• l'ensemble profilé droit de verrouillage avant (4) pouvant entrer/sortir dudit ensemble profilé central de verrouillage avant (2),
• un ensemble de verrouillage gauche portable (6) en contact avec ledit ensemble profilé gauche de verrouillage avant (3) et permettant le transport de conteneurs non tunnel de 40 pieds,
• un ensemble de verrouillage droit portable (7) en contact avec ledit ensemble profilé droit de verrouillage avant (4) et permettant le transport de conteneurs non tunnel de 40 pieds,
• un ensemble support (8) en contact avec un ensemble goupille mobile (10) et permettant aux conteneurs d'être fixés durant le chargement et le déchargement, **caractérisé en ce qu'**il comprend en outre :
• une butée d'arrêt (9) permettant audit ensemble profilé gauche de verrouillage avant (3) et audit ensemble profilé droit de verrouillage avant (4) d'être fixés dans le profilé central de verrouillage avant (2),
• l'ensemble goupille mobile (10) en contact avec ladite butée d'arrêt (9),
• une goupille (11) de butée d'arrêt en contact avec ladite butée d'arrêt (9).

2. Mécanisme de verrouillage avant selon la revendication 1, **caractérisé en ce que** l'ensemble profilé central de verrouillage avant (2) comprend
- un espace en U de profilé de verrouillage avant (2.1) comprenant un siège de support interne de profilé de verrouillage avant (2.1.1) et un siège de support externe de profilé de verrouillage avant (2.1.2),
- un profilé central (2.2),
- un siège d'ensemble support (2.3),
- un logement à glissière vertical d'arrêt de butée (2.4) à travers lequel la butée d'arrêt passe et se déplace
- un support inférieur d'arrêt de butée (2.5) sur lequel la butée d'arrêt est fixée et coulisse ; et qui comprend un logement à glissière horizontal (2.5.1) de butée d'arrêt, un siège de position inférieure (2.5.2) de butée d'arrêt et un siège de position supérieure (2.5.3) de butée d'arrêt.

3. Mécanisme de verrouillage avant selon la revendication 2, **caractérisé en ce que** l'espace en U du profilé de verrouillage avant (2.1) comprend une forme en « U », une goupille verticale de verrouillage avant (3.2) pouvant se déplacer.

4. Mécanisme de verrouillage avant selon la revendication 1, **caractérisé en ce que** l'ensemble profilé gauche (3) comprend une poignée (3.3) à laquelle une goupille horizontale de verrouillage avant (3.1) est raccordée.

5. Mécanisme de verrouillage avant selon la revendication 4, **caractérisé en ce que** la poignée (3.3) comprend un trou de goupille central (3.3.1) de poignée fixé audit ensemble profilé gauche de verrouillage avant (3) et audit ensemble profilé droit de verrouillage avant (4) par l'intermédiaire du déplacement dudit ensemble goupille (10), un trou de goupille avant (3.3.2) de poignée, un trou de goupille arrière (3.3.3) de poignée, un siège (3.3.4) de poignée et un arrêt de butée (3.3.5) de poignée.

6. Mécanisme de verrouillage avant selon la revendication 1, **caractérisé en ce que** l'ensemble profilé gauche (3) comprend un butoir externe de profilé de verrouillage avant (3.3) auquel la goupille horizontale de verrouillage avant (3.1) et la poignée (3.3) sont fixées et qui comprend un trou horizontal de butoir externe de profilé de verrouillage avant (3.4.1), un trou vertical de butoir externe de profilé de verrouillage avant (3.4.2) et un siège de butoir externe de profilé de verrouillage avant (3.4.3).

7. Mécanisme de verrouillage avant selon la revendication 1, **caractérisé en ce que** l'ensemble profilé gauche (3) comprend une plaque supérieure de profilé de verrouillage avant (3.5) sur laquelle l'ensemble de verrouillage gauche portable (6) et l'ensemble de verrouillage droit portable (7) sont montés et qui comprend un espace de plaque supérieure de profilé de verrouillage avant (3.5.1) dans lequel les dents de verrouillage portables (6.3.1) pénètrent.

8. Mécanisme de verrouillage avant selon la revendication 1, **caractérisé en ce que** l'ensemble profilé gauche (3) comprend un profilé de verrouillage avant (3.6) qui peut entrer/sortir de l'ensemble profilé central de verrouillage avant (2).

9. Mécanisme de verrouillage avant selon la revendication 8, **caractérisé en ce que** le profilé de verrouillage avant (3.6) comprend un trou de goupille vertical de verrouillage avant (3.6.1), un écart de profilé de verrouillage avant (3.6.3) et un écart angulaire de profilé de verrouillage avant (3.6.4).

10. Mécanisme de verrouillage avant selon la revendication 1, **caractérisé en ce que** l'ensemble profilé gauche (3) comprend une plaque de support interne de profilé de verrouillage avant (3.7) sur laquelle la butée d'arrêt porte à partir de l'avant.

11. Mécanisme de verrouillage avant selon la revendication 1, **caractérisé en ce que** l'ensemble de verrouillage gauche portable (6) est formé par assemblage par soudage d'un verrou de conteneur (6.1), d'un support radial de verrouillage portable (6.2), d'une plaque arrière de verrouillage portable (6.3) avec des dents de verrouillage portables et une plaque de support de verrouillage portable (6.4).

12. Mécanisme de verrouillage avant selon la revendication 11, **caractérisé en ce que** le support radial de verrouillage portable (6.2) comprend un siège de support radial de verrouillage portable (6.2.1) qui, au moyen de l'entrée de la goupille horizontale de verrouillage avant (3.1) dans celui-ci, permet l'ensemble de verrouillage gauche portable (6) d'être fixé et déplacé.

13. Mécanisme de verrouillage avant pour véhicules de transport selon la revendication 1 ou 2 et **caractérisé en ce qu'**il comprend un ensemble support (8) empêchant les dommages sur les pièces durant le chargement et le déchargement de conteneur et entrant dans le siège de l'ensemble support (2.3).

14. Mécanisme de verrouillage avant selon la revendication 1, **caractérisé en ce que** la butée d'arrêt (9) comprend un trou de support (9.1) de butée d'arrêt et un trou de positionnement de butée d'arrêt (9.2).

15. Mécanisme de verrouillage avant selon la revendication 1, **caractérisé en ce qu'**il comprend la goupille (11) de butée d'arrêt fixée à la butée d'arrêt (9) en traversant le logement à glissière horizontal (2.5.1) de butée d'arrêt.
